(19) Europäisches Patentamt
European Patent Office
Office européen des brevets

(11) Veröffentlichungsnummer: **0 423 565 B1**

(12) **EUROPÄISCHE PATENTSCHRIFT**

(45) Veröffentlichungstag der Patentschrift: **24.08.94**

(51) Int. Cl.[5]: **C08F 220/24**, C08F 220/28, C08F 283/00, C14C 11/00, D21H 17/37, D06M 15/277

(21) Anmeldenummer: **90119140.3**

(22) Anmeldetag: **05.10.90**

Die Akte enthält technische Angaben, die nach dem Eingang der Anmeldung eingereicht wurden und die nicht in dieser Patentschrift enthalten sind.

# (54) Perfluoralkylgruppen enthaltende Copolymerisate/II.

(30) Priorität: **17.10.89 DE 3934543**

(43) Veröffentlichungstag der Anmeldung:
**24.04.91 Patentblatt 91/17**

(45) Bekanntmachung des Hinweises auf die Patenterteilung:
**24.08.94 Patentblatt 94/34**

(84) Benannte Vertragsstaaten:
**CH DE FR GB IT LI**

(56) Entgegenhaltungen:
**US-A- 4 680 361**

**POLYMER SCIENCE U.S.S.R.,Seite 2291-2299,1978, PERGAMON PRESS.A.A. BERLIN etal.:"The dielectric and the nuclear magnetic relaxation processes in stericoligo-acrylic esters polymers."& Vysokomol.Soyed.A19:No 9,1994-2001,1977.**

(73) Patentinhaber: **BAYER AG**

**D-51368 Leverkusen (DE)**

(72) Erfinder: **Röttger, Jutta, Dr.**
**Andreas-Gryphius-Strasse 20**
**W-5000 Köln 80 (DE)**
Erfinder: **Kortmann, Wilfried, Dr.**

**verstorben (DE)**
Erfinder: **Piejko, Karl-Erwin, Dr.**
**Unterscheider Weg 7a**
**W-5060 Bergisch Gladbach 2 (DE)**
Erfinder: **Renner, Gerd Friedrich, Dr.**
**Andreas-Gryphius-Strasse 22**
**W-5000 Köln 80 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Copolymerisate und Pfropfcopolymerisate auf bekannten Pfropfgrundlagen aus Perfluoralkylacrylaten oder -methacrylaten und Estern der allgemeinen Formel (I) bzw. (11)

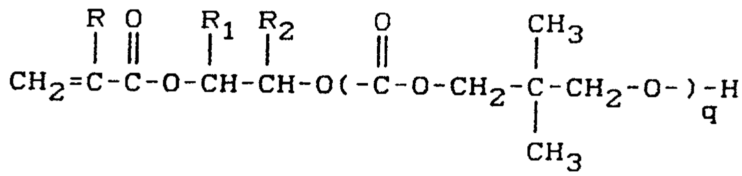

(I)

bzw.

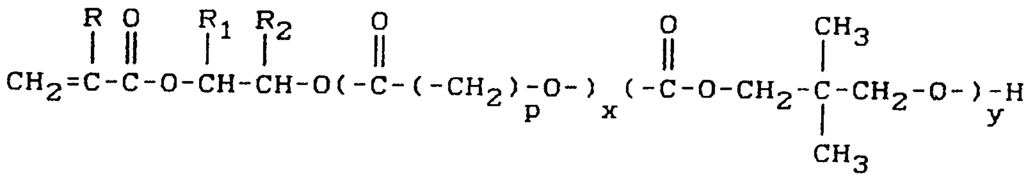

(II),

worin - unabhängig voneinander -

R, $R_1$ und $R_2$ Wasserstoff oder Methyl,

p 2 bis 6,

q 2 bis 200, und

x und y 3 - 30 bedeuten,

und worin die Perfluoralkyl(meth)acrylate den allgemeinen Formeln

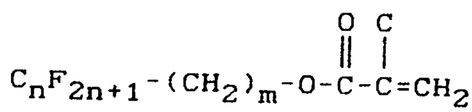

(III)

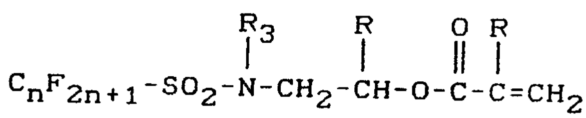

(IV)

und

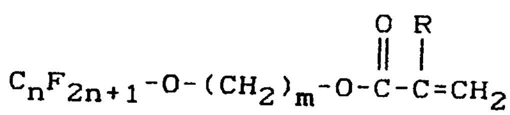

(V)

entsprechen, worin

R Wasserstoff oder Methyl,

$R_3$ H oder $C_1$-$C_6$-Alkyl,

m 1 bis 4 und

n 6 bis 12 bedeuten,

sowie deren Herstellung und deren Verwendung zur Ausrüstung von Textilmaterialien, Leder und Papier.

Von den Estern der Formel (I) werden die mit R = Wasserstoff oder Methyl, $R_1$ = $R_2$ = Wasserstoff und q = 8 bis 30 bevorzugt.

Von den Estern der Formel (II) werden die mit R = Wasserstoff oder Methyl, $R_1$ = $R_2$ = Wasserstoff, p = 5 sowie die Kombinationen

$x \approx y \approx 5$ bzw.
$x \approx y \approx 10$ bzw. $x \approx 7{,}5$, $y \approx 5$ bzw.
$x \approx 15$, $y \approx 10$
bevorzugt.

Die Ester der allgemeinen Formel (I) sind z.B. beschrieben in DE 3 723 194 und EP 299 305.

Ester der allgemeinen Formel (II) sind beschrieben in US 3 379 693.

Die Comonomeren (III) bis (V). die daraus hergestellten Polymeren und deren Verwendung zur öl- und wasserabweisenden Ausrüstung von Textilien sind u.a. aus US 3 403 122, 3 847 657, 3 916 053 und 3 919 183 bekannt.

Die Verwendung von Alkyl(meth)acrylaten als Comonomere bei der Herstellung von Perfluoralkylcopolrmerisaten und die Verwendung dieser Copolymerisate zur Textilausrüstung ist bereits bekannt und wird beispielsweise in US 2 803 615 und 3 062 765 beschrieben.

Mit diesen Perfluoralkylcopolymerisaten kann eine weitere Verbesserung der Oleophob-/Hydrophob-Eigenschaften nur durch eine Erhöhung der fluorhaltigen Komponente in der Copolymerisatdispersion erreicht werden. Diese Vorteils werden aber mit Nachteilen wie Verhärtungen und Verklebungen, die sich negativ auf den Griff der damit ausgerüsteten Textilien auswirken, erkauft.

Es ist auch bekannt, polare Comonomere zur Herstellung von Perfluoralkylcopolymeren zu verwenden. Zum Beispiel wird in US 4 557 837 die Synthese spezieller in Methanol löslicher Perfluoralkylpolymerer durch Copolymerisation von Perfluoralkyl(meth)acrylaten und solchen polaren Comonomeren, die eine Solubilisierung der Copolymeren in Methanol bewirken, beschrieben. Derartige Comonomere sind beispielsweise Acrylsäure- oder Methacrylsäureester, die mit Glykolen wie Ethylenglykol oder Triethylenglykol verestert sind. Diese Perfluoralkylacrylatcopolymerisate sind für eine Oleophobausrüstung von Textilien geeignet, nicht aber für eine gleichzeitige Hydrophobausrüstung.

Es bestand darum die Aufgabe, hochwirksame Ausrüstungsmittel zur Verfügung zu stellen, die gleichzeitig oleophobierend und hydrophobierend wirken und nicht die geschilderten Nachteile zeigen.

Ülberraschend wurde nun gefunden, daß sich die erfindungsgemäßen Copolymerisate, die unter Verwendung der Ester (I) bzw. (II) hergestellt werden, ausgezeichnet zum gleichzeitigen Hydrophobieren und Oleophobieren eignen. Zudem kann bei Verwendung der Ester (I) bzw. (II) als Comonomere im Vergleich zu fluorhaltigen Copolymerisaten, die ohne Einsatz von Estern der allgemeinen Formel (I) bzw. (II) hergestellt werden, eine Verbesserung der Oleophob-, aber vor allem der Hydrophobeigenschaften erreicht werden, ohne daß der Anteil an fluorhaltiger Komponente im Latex erhöht werden muß.

Copolymerisate mit speziellen Eigenschaften können durch Copolymerisation der Ester (I) bzw. (II) und der Perfluoralkyl(meth)acrylate (III bis V) mit weiteren olefinisch ungesättigten copolymerisierbaren Monomeren erhalten werden. Solche olefinisch ungesättigten Comonomere können in Anteilen von z.B. bis zu 65 Gew.-% einpolymerisiert werden. Beispiele für solche Comonomere sind Styrol, Acrylnitril, Vinylacetat, Acryl- und Methacrylsäureester, die sich von aliphatischen Alkoholen mit bis zu 22 Kohlenstoffatomen ableiten. Beispiele für diese Alkohole sind n-Butanol, Isobutanol, Ethylhexyl-, Lauryl-, Stearyl-, Behenyl- und Oleylalkohol.

Beispielsweise können durch Einpolymerisieren dieser Monomeren die Einfriertemperaturen und damit die Filmbildungstendenz und -temperatur in gewünschter Weise beeinflußt werden.

Die erfindungsgemäßen Copolymerisate können auch als Pfropfcopolymerisate vorliegen, die unter Verwendung bekannter Pfropfgrundlagen aus den vorstehend beschriebenen Comonomeren hergestellt werden.

Die Pfropfcopolymerisation unter Verwendung von Perfluoralkyl(meth)acrylaten in wäßriger Emulsion ist z.B. aus den DE 3 407 361 und 3 407 362 bekannt.

Als Pfropfgrundlagen eignen sich besonders hydrophobe Polymere in Form von wäßrigen Dispersionen.

Beispiele für derartige Pfropfgrundlagen sind Melaminpolykondensate. Sie können z.B. erhalten werden durch Polykondensation von Methylolaminotriazinen, deren Veretherungs- oder Veresterungsprodukten mit Carbonsäuren und primären oder sekundären Aminen. Sie werden beispielsweise in DE 956 990 beschrieben.

Bei den erfindungsgemäßen Copolymerisaten liegt das Gewichtsverhältnis der Comonomeren (I) bzw. (II) zu den Perfluoralkylmonomeren (III), (IV) und/oder (V) bei 1:1,5 bis 6, insbesondere bei 1:2,5 bis 4,5.

Der Anteil der Monomeren in den erfindungsgemäßen Copolymeren liegt bei 5 bis 35 Gew.-%, bevorzugt 8 bis 20 Gew.-%, der Ester (I) bzw. (II), bei 15 bis 65 Gew.-%, bevorzugt 25 bis 55 Gew.-%, der Perfluoralkylmonomeren (III), (IV) und/oder (V) und bei 0 bis 65 Gew.-%, bevorzugt 35 bis 60 Gew.-%, von weiteren olefinisch ungesättigten copolymerisierbaren Monomeren.

Die Herstellung der erfindungsgemäßen Copolymerisate erfolgt in Lösung, Dispersion oder Emulsion. Es kann vorteilhaft sein, bei der Copolymerisation Hilfslösungsmittel zu verwenden, die z.B. in US 3 062

765 beschrieben werden. Weiterhin ist es möglich, mit Wasser nicht mischbare Hilfslösungsmittel wie Essigsäureethylester oder Chlorfluorokohlenstoffe zu verwenden. Es kann vorteilhaft sein, unter Ausschluß von Sauerstoff oder Luft, d.h. unter Verwendung von Inertgasen, zu polymerisieren. Falls Hilfslösungsmittel verwendet werden, ist es erforderlich, nach Beendigung der Polymerisation die Hilfslösungsmittel destillativ abzutrennen.

Die Copolymerisation wird durch bekannte Radikale bildende Starter oder Startersysteme wie Peroxide, aliphatische Azoverbindungen oder Redoxsysteme initiiert. Im allgemeinen ist es vorteilhaft, ein Mengenverhältnis vom Starter zum Monomergemisch von 0,2 bis 0,4:100, vorzugsweise von 0,3 bis 0,35:100, zu wählen.

Die Polymerisationstemperatur richtet sich nach dem jeweiligen Initiatorsystem. Allgemein polymerisiert man bei Temperaturen von 40 bis 110 °C. Spezielle Redoxsysteme erlauben es auch, die Polymerisation bereits bei 25 °C durchzuführen.

Eine besonders bevorzugte Ausführungsform der erfindungsgemäßen Copolymerisation ist die Polymerisation in wäßriger Dispersion oder Emulsion. Als Hilfsmittel werden bei dieser Verfahrensweise Dispergatoren oder Emulgatoren verwendet.

Als Dispergatoren sind vorzugsweise Polyvinylalkohole oder Cellulosederivate wie Celluloseester oder Celluloseether geeignet.

Als Emulgatoren kann man sowohl nichtionische, anionische wie auch kationische Emulgatoren verwenden. Besonders vorteilhaft ist es, Gemische aus entweder anionischen und nicht ionischen Emulgatoren oder aus kationischen und nicht ionischen Emulgatoren zu verwenden.

Die Emulgatormengen liegen im bekannten Rahmen.

Beispiele für nichtionische Emulgatoren sind Polyglykolether z.B. Ethylenoxid/Propylenoxid-Block- oder -copolymer sowie Alkoxylierungsprodukte, insbesondere Ethoxylierungsprodukte von Fettalkoholen, Alkylphenolen, Fettsäuren, Fettsäureamiden, Sorbitmonooleat. Beispiele für kationische Emulgatoren sind quartäre Ammonium- oder Pyridiniumsalze, z.B. Stearyldimethylbenzylammoniumchlorid oder N,N,N-Trimethyl-N-perfluoroctansulfonamidopropylammoniumchlorid.

Die erfindungsgemäßen Copolymerisate werden vorzugsweise in Form wäßriger Dispersionen zur Hydrophob-/Oleophobausrüstung verwendet.

Mit den erfindungsgemäßen Copolymeren können natürliche und synthetische Materialien wie Fasern, Filamente, Garne, Vliese, Gewebe, Gewirke und Gestricke, insbesondere Teppiche, aus insbesondere Cellulose und ihren Derivaten, aber auch aus Polyester-, Polyamid- und Polyacrylnitrilmaterialien, Wolle oder Seide wie auch Leder und Papier erfolgreich oleophob und hydrophob ausgerüstet werden.

Für die Ausrüstung von Teppichen werden die erfindungsgemäßen Copolymerisate und Pfropfcopolymerisate in Form wäßriger Dispersionen, vorzugsweise in Kombination mit wäßrigen kolloidalen Suspensionen von Organosilsesquioxanen, wie sie in DE 3 307 420 beschrieben sind, und gegebenenfalls in zusätzlicher Kombination mit anderen fluorhaltigen Copolymerisat-Dispersionen eingesetzt.

Die Ausrüstung erfolgt nach bekannten Verfahren, z.B. nach dem Auszieh- oder Foulard-Verfahren, beispielsweise zwischen Raumtemperatur und 40 °C, aber auch durch Pflatschen oder Besprühen mit einer nachgeschalteten Temperaturbehandlung bei 80 bis 180 °C, vorzugsweise 120 bis 150 °C.

Mit den erfindungsgemäßen Copolymerisatsystemen ist eine kombinierte Oleophob-/Hydrophobausrüstung natürlicher und synthetischer Materialien möglich. Die erfindungsgemäße Verwendung der Ester (I) und (II) als Comonomere ermöglicht zudem eine Verbesserung der Oleophob-/Hydrophobeigenschaften, ohne daß wie üblich der Anteil an Perfluorkomponenten im Latex erhöht werden muß, wodurch Nachteile wie Verklebungen und Verhärtungen sowie damit verbundener schlechter Griff auf den damit ausgerüsteten Textilien vermieden werdend.

<u>Beispiel 1</u>

a) <u>Herstellung eines als Pfropfgrundlage verwendbaren Polykondensats</u>

1,5 Mol Behensäure werden aufgeschmolzen und innerhalb 30 Min. gleichzeitig mit 1 Mol Melaminhexamethylolpentamethylether und 0,9 Mol N-Methyldiethanolamin versetzt. Dabei wird die Schmelze auf 150 °C gebracht und 3 Stunden bei dieser Temperatur gehalten.

Anschließend wird in die Schmelze die gleiche Gewichtsmenge eines Paraffins vom Schmelzpunkt 52 °C eingetragen.

b) <u>Herstellung einer Pfropfcopolymerisatdispersion unter Verwendung eines Monomeren der Formel (I)</u>

Man bereitet folgende Lösungen bei 50 °C:

<u>Lösung 1</u>

780,0 Gew.-Tle entionisiertes Wasser

4,54 Gew.-Tle eines ethoxylierten Nonylphenols mit 10 EO
1,8 Gew.-Tle Benzyldodecyldimethylammoniumchlorid
Lösung 2
300 Gew.-Tle Essigsäureethylester
57.5 Gew.-Tle N-Methyl-N-perfluoroctansulfonamidoethylmethacrylat
29,5 Gew.-Tle Stearylmethacrylat
23,8 Gew.-Tle Vinylacetat
20,0 Gew.-Tle Monomeres der Formal (I) mit q ~ 15, R = H, $R_1$, $R_2$ = H
Man bereitet folgende Lösung bei 30 °C:
Lösung 3
0,656 Gew.-Tle t-Butylperpivalat
0,925 Gew.-Tle Dilaurylperoxid
5,0 Gew.-Tle Essigsäureethylester
Die Lösungen 1 und 2 werden bei 50 °C emulgiert. Die erhaltene Emulsion gibt man in einen Reaktor, der mit Rührer, Rückflußkühler und Innenthermometer ausgestattet ist und läßt auf 30 °C abkühlen. Man setzt Lösung 3 bei 30 °C unter Rühren zu und steigert die Temperatur innerhalb 1 Stunde von 30 auf 50 °C, sowie in einer weiteren Stunde von 50 auf 70 °C.

Danach beläßt man das Reaktionsgemisch 2 Stunden bei 70 °C. Anschließend hält man die Temperatur für 2 Stunden bei 70 bis 80 °C, destilliert dabei den Essigsäureethylester über eine zusätzlich angebrachte Destillationsapparatur ab und rührt noch 1 Stunde bei 80 °C nach.
Feststoffgehalt: 15,0 %
Fluorgehalt im Feststoff: 19,6 %
Mittlere Teilchengröße: 236 nm
(nach Lichtstreuung).

Beispiel 2 (zum Vergleich)

Herstellung einer Pfropfcopolymerisatdispersion ohne Verwendung eines Monomeren der Formel (I)

Man bereitet folgende Lösungen bei 50 °C:
Lösung 1: wie im Beispiel 1b) beschrieben,
Lösung 2: wie im Beispiel 1b) beschrieben, aber ohne Monomeres I.
Man bereitet folgende Lösung bei 30 °C:
Lösung 3: wie im Beispiel 1b) beschrieben.
Die Lösungen werden anschließend nach dem im Beispiel 1b) beschriebenen Verfahren umgesetzt.
Feststoffgehalt: 13,0 %
Fluorgehalt im Feststoff: 21,3 %
Mittlere Teilchengröße: 221 nm
(nach Lichtstreuung)

Beispiel 3

Herstellung einer Pfropfcopolymerisatdispersion unter Verwendung eines Monomeren der Formel (I)

1. Stufe: Herstellung des Vorlatex

Man bereitet folgende Lösungen bei Raumtemperatur:
Lösung 1
1323 Gew. -Tle entionisiertes Wasser
19,2 Gew.-Tle eines ethoxylierten Nonylphenols mit 20 EO
12,6 Gew.-Tle Benzyldodecyldimethylammoniumchlorid
Lösung 2
231,6 Gew.-Tle Essigsäureethylester
38,4 Gew.-Tle Bernsteinsäurediethylester
316,8 Gew.-Tle Stearylmethacrylat
316,8 Gew.-Tle Isobutylmethacrylat
Lösung 3
3,6 Gew.-Tle t-Butylperpivalat

3,6 Gew.-Tle Essigsäureethylester

Aus den Lösungen 1 und 2 wird eine Mischung hergestellt und diese siebenmal bei 50 °C emulgiert. Die erhaltene Emulsion wird in einen Reaktor gegeben, der mit Rührer, Rückflußkühler und Innenthermometer versehen ist. Man gibt unter Rühren bei 50 °C Lösung 3 zu. Es wird noch eine halbe Stunde bei 50 bis 60 °C, dann eine halbe Stunde bei 60 bis 70 °C gerührt und danach 2 Stunden bei 70 °C gehalten. Anschließend läßt man das Reaktionsgemisch 3 Stunden am Rückfluß bei ca. 78 °C reagieren. Man erhält einen Vorlatex mit 29,7 % Feststoffgehalt.

2. Stufe: Herstellung der Pfropfcopolymerisatdispersion

Man bereitet folgende Lösungen bei 50 °C:

Lösung 1

268,0 Gew.-Tle Vorlatex aus Stufe 1
4,1 Gew.-Tle eines ethoxylierten Nonylphenols mit 10 EO
4,16 Gew.-Tle Benzyldodecyldimethylammoniumchlorid
498,0 Gew.-Tle entionisiertes Wasser

Lösung 2

332,0 Gew.-Tle Essigsäureethylester
38,6 Gew.-Tle N-Methyl-N-perfluoroctansulfonamido-ethylmethscrylat
11,3 Gew.-Tle Stearylmethacrylst
16,4 Gew.-Tle Vinylacetat
12,0 Gew.-Tle Monomeres der allgemeinen Formel (I) mit R = H, q ≈ 15, $R_1$, $R_2$ = H.

Es wird folgende Lösung bei 30 °C hergestellt:

Lösung 3

0,815 Gew.-Tle Dilaurylperoxid
5 Gew.-Tle Essigsäureethylester
0,238 Gew.-Tle tert.-Butylperpivalat

Die Lösungen 1 und 2 werden zusammengegeben und bei 50 °C homogenisiert. Die erhaltene Emulsion gibt man in einen Reaktor, der mit Rührer, Rückflußkühler und Innenthermometer ausgestattet ist und läßt auf 30 °C abkühlen. Man setzt Lösung 3 unter Rühren zu und läßt eine Stunde bei 30 bis 40 °C rühren.

Anschließend erhitzt man auf 60 bis 70 °C und läßt eineinhalb Stunden in diesem Temperaturbereich reagieren. Danach erhöht man die Temperatur auf 70 bis 80 °C und destilliert dabei innerhalb von drei Stunden über eine zusätzlich angebrachte Destillationsapparatur den Essigsäureethylester ab. Man rührt noch drei Stunden bei 83 bis 85 °C nach.

Feststoffgehalt: 19,8 %
Fluorgehalt im Feststoff: 11,7 %
Mittlere Teilchengröße: 352 nm
(nach Lichtstreuung)

Beispiel 4

Herstellung einer Copolymerisatdispersion unter Verwendung eines Monomeren der Formel (I)

Man bereitet folgende Lösungen bei 40 °C:

Lösung 1

800 Gew.-Tle entionisiertes Wasser
5 Gew.-Tle eines ethoxylierten Laurylalkohols mit 12 EO
7,5 Gew.-Tle Benzyldodecyldimethylammoniumchlorid

Lösung 2

300 Gew.-Tle Essigsäureethylester
41,1 Gew.-Tle N-Methyl-N-perfluoroctansulfonamidoethylmethacrylat
20,5 Gew.-Tle Stearylmethacrylat
20,5 Gew.-Tle Behenylacrylat
28,45 Gew.-Tle Isobutylmethacrylat
28,45 Gew.-Tle Butylacrylat
14 Gew.-Tle Monomeres der Formel (II) mit $R_1$, $R_2$ = H, R = $CH_3$, y ~ z ~ 10.

Lösung 3

1,5 Gew.-Tle t-Butylperpivalat

1,5 Gew.-Tle Dilaurylperoxid
2,0 Gew.-Tle Essigsäureethylester

Die Lösungen 1 und 2 werden emulgiert. Die erhaltene Emulsion gibt man in einen Reaktor, der mit Rührer, Rückflußkühler und Innenthermometer ausgestattet ist. Man setzt Lösung 3 bei 40 °C unter Rühren zu und steigert die Temperatur innerhalb einer halben Stunde auf 70 °C. Man läßt zwei Stunden bei dieser Temperatur reagieren, erhitzt dann auf 70 bis 80 °C und beläßt das Reaktionsgemisch weitere zwei Stunden bei diesem Temperaturbereich, wobei der Essigsäureethylester über eine zusätzlich angebrachte Destillationsapparatur abdestilliert wird. Danach rührt man noch 1 Stunde bei 80 °C nach.

Feststoffgehalt: 15,8 %
Fluorgehalt im Feststoff: 13,5 %
Mittlere Teilchengröße: 237 nm
(nach Lichtstreuung)

Beispiel 5

Herstellung einer Copolymerisatdispersion unter Verwendung von Verbindungen der Formel (I)

Man bereitet folgende Lösungen bei 40 °C:

Lösung 1:
Wie in Beispiel 4 beschrieben.

Lösung 2:
Wie in Beispiel 4 beschrieben, aber unter Ersatz der Verbindung der Formel (II) durch eine Verbindung der Formel (I) mit R, $R_1$, $R_2$ = H sowie q ~ 30.

Lösung 3:
Wie in Beispiel 4 beschrieben.

Die Lösungen werden anschließend nach dem in Beispiel 4 beschriebenen Verfahren umgesetzt.

Feststoffgehalt: 15,4 %
Fluorgehalt im Feststoff: 13,5 %
Mittlere Teilchengröße: 240 nm
(nach Lichtstreuung)

Beispiel 6 (zum Vergleich)

Herstellung einer Copolymerisatdispersion unter Weglassen der Verbindungen der Formel (II)

Man bereitet folgende Lösungen bei 40 °C:

Lösung 1:
Wie in Beispiel 4 beschrieben.

Lösung 2:
Wie in Beispiel 4 beschrieben, aber ohne Monomeres (II).

Lösung 3:
Wie in Beispiel 4 beschrieben.

Die Lösungen werden anschließend nach dem in Beispiel 4 beschriebenen Verfahren umgesetzt.

Feststoffgehalt: 14,9 %
Fluorgehalt im Feststoff 14,8 %
Mittlere Teilchengröße: 492 nm
(nach Lichtstreuung)

Beispiel 7

Beispiele für Verwendung der erfindungsgemäßen Copolymerisate

Es wird eine wäßrige Dispersion nach Beispiel 4 hergestellt. 15 Gew.-Teile dieser Dispersion werden mit 15 Gew.-Teilen einer weiteren fluorhaltigen Dispersion (AG 800, Asahi Glass) und 70 Gew.-Teilen einer wäßrigen kolloidslen Suspension von Organosilsesquioxanen, wie sie in DE 3 307 420 beschrieben sind, abgemischt.

Eine 2,5 %ige wäßrige Verdünnung dieser Mischung wird auf einen Polyamid-Teppich (Tuftingware mit 30 % Restfeuchte, Polgewicht: 500 g/m$^2$) so aufgebracht (Sprühauftrag), daß eine Auflage von 1 Gew.-%

der obengenannten Mischung (bezogen auf das Polgewicht) auf dem Teppich verbleibt.

Anschließend wird bei 125 bis 150 °C während 5 bis 15 Minuten getrocknet und kondensiert, dann 24 Stunden bei 23 °C und 65 % relativer Luftfeuchtigkeit klimntisiert und die anwendungstechnischen Prüfungen durchgeführt. Die Ergebnisse sind Tabelle 1 zu entnehmen.

Analog wurden nach Beispiel 1b), 2, 3, 5 und 6 hergestellte Dispersionen eingesetzt. Die erhaltenen anwendungstechnischen Ergebnisse sind ebenfalls Tabelle 1 zu entnehmen.

Tabelle 1

| | Oleophobie[1)] | Hydrophobie[2)] |
|---|---|---|
| Beispiel 1b) | 5 | 70/30 - 60/40 |
| Beispiel 2 | 4 - 5 | 80/20 - 70/30 |
| Beispiel 3 | 5 | 60/40 - 50/50 |
| Beispiel 4 | 6 | 20/80 |
| Beispiel 5 | 5 - 6 | 20/80 |
| Beispiel 6 | 5 | 40/60 - 30/70 |

[1)] nach AATCC-Test-Methode 118 (5 besser als 4)
[2)] Beständigkeit gegen wäßrig isopropanolische Lösungen (Wassser/Isopropanol = 40/60 besser als 50/50).

Tabelle 1 zeigt die anwendungstechnischen Ergebnisse, die erhalten werden, wenn die nach Beispiel 1b) bis 6 hergestellten Copolymerisatdispersionen bei der Oleophob-/Hydrophobausrüstung von Teppichen auf Basis von Polyamidfasern eingesetzt werden.

Gegenüber den ohne Verwendung von Monomeren der Formel (I) bsw. (II) hergestellten Copolymerisatdispersionen (Beispiele 2 und 6) ergibt sich eine deutliche Verbesserung der oleophobierenden und der hydrophobierenden Wirkung bei Copolymerisation mit solchen Monomeren (Beispiele 1b), 3, 4 und 5). Das Anschmutzverhalten der mit den erfindungsgemäßen Copolymerisatdispersionen ausgerüsteten Teppiche ist verbessert und entspricht erhöhten Anforderungen.

## Patentansprüche

1. Copolymerisate und Pfropfcopolymerisate auf bekannten Pfropfgrundlagen aus Perfluoralkylacrylaten oder -methacrylaten und Estern der allgemeinen Formel (I) bzw. (II)

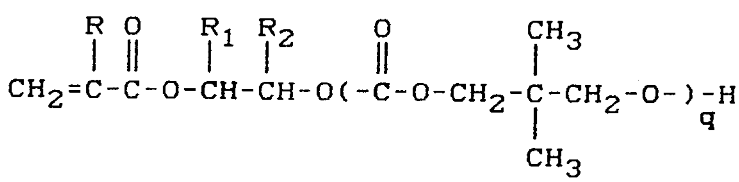

(I)

bzw.

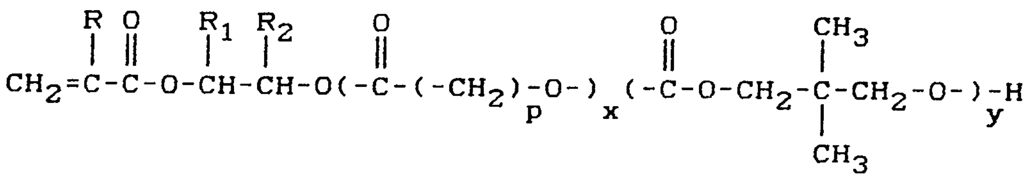

(II),

worin - unabhängig voneinander -

R, $R_1$ und $R_2$ Wasserstoff oder Methyl,

p 2 bis 6,

q 2 bis 200
und x und y 3 bis 30 bedeuten,
und worin die Perfluoralkyl(meth)acrylate den Formeln

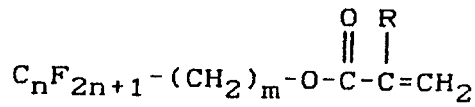
(III)

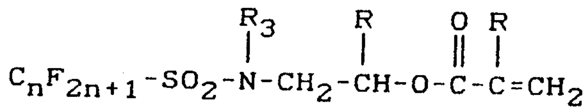
(IV)

oder

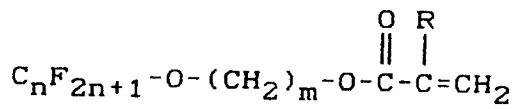
(V)

entsprechen, worin

R Wasserstoff oder Methyl,
$R_3$ H oder $C_1$-$C_6$-Alkyl,
m 1 bis 4 und
n 6 bis 12 bedeuten,

wobei das Gewichtsverhältnis von Estern zur Perfluoralkyl(meth)acrylaten 1:1,5 bis 6 beträgt.

**2.** Copolymerisate und Pfropfcopolymerisate nach Anspruch 1, dadurch gekennzeichnet, daß sie außerdem Bausteine von anderen olefinisch ungesättigten copolymerisierbaren Monomeren enthalten.

**3.** Pfropfcopolymerisate nach Anspruch 1, dadurch gekennzeichnet, daß die Pfropfgrundlagen Melaminpolykondensate sind.

**4.** Copolymerisate und Pfropfcopolymerisate nach Anspruch 1, dadurch gekennzeichnet, daß das Gewichtsverhältnis von Estern (I) bzw. (II) zu Perfluoralkyl(meth)acrylaten 1:2,5 bis 4,5 beträgt.

**5.** Copolymerisate und Pfropfcopolymerisate nach Anspruch 1 bzw. 2, dadurch gekennzeichnet, daß der Anteil der Ester (I) bzw. (II) bei 5 bis 35 Gew.-%, der Anteil der Perfluoralkyl(meth)acrylate bei 15 bis 65 Gew.-% und der weiterer olefinisch ungesättigter Monomerer bei 0 bis 65 Gew.-% liegt.

**6.** Verfahren zur Hydrophob- und Oleophobausrüstung von Textilmaterialien, Leder und Papier, dadurch gekennzeichnet, daß man Copolymerisate und Pfropfcopolymerisate nach Anspruch 1 bis 5, verwendet.

**7.** Verfahren nach Anspruch 6, dadurch gekennzeichnet, daß man Kombinationen aus Copolymerisaten und Pfropfcopolymerisaten des Anspruchs 1 mit anderen fluorhaltigen Copolymerisatdispersionen verwendet.

**8.** Verfahren nach Anspruch 6, dadurch gekennzeichnet, daß man Kombinationen der Copolymerisate oder Pfropfcopolymerisate nach Anspruch 1-5 mit wäßrigen kolloidalen Susensionen von Organosilsesquioxanen, gegebenenfalls in Kombination mit anderen fluorhaltigen Copolymerisatdispersionen, verwendet.

## Claims

**1.** Copolymers and graft copolymers on known grafting bases of perfluoroalkyl acrylates or methacrylates and esters, of the general formula (I) or (II)

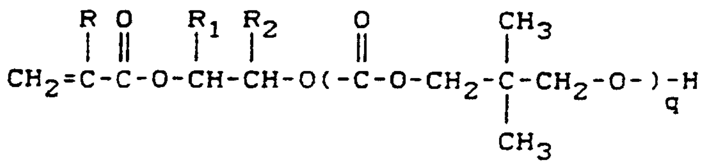 (I)

or

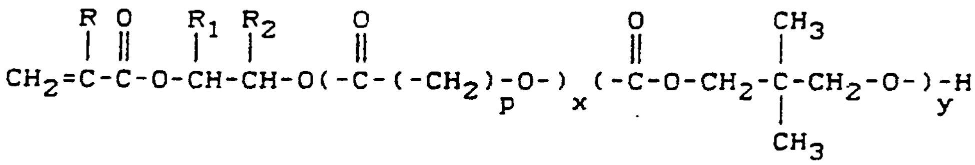

(II),

wherein - independently of one another -

| | |
|---|---|
| R, $R_1$ and $R_2$ | denote hydrogen or methyl, |
| p | denotes 2 to 6, |
| q | denotes 2 to 200 |

and x and y denote 3 to 30, and wherein the perfluoroalkyl (meth)acrylates correspond to the formulae

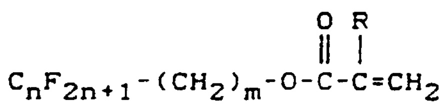 (III)

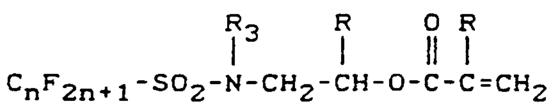 (IV)

or

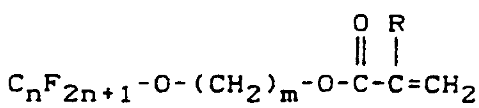 (V)

wherein

| | |
|---|---|
| R | denotes hydrogen or methyl, |
| $R_3$ | denotes H or $C_1$-$C_6$-alkyl, |
| m | denotes 1 to 4 and |
| n | denotes 6 to 12, |

the weight ratio of esters to perfluoroalkyl (meth)acrylates being 1:1.5 to 6.

**2.** Copolymers and graft copolymers according to Claim 1, characterized in that they also contain units of other olefinically unsaturated copolymerizable monomers.

**3.** Graft copolymers according to Claim 1, characterized in that the grafting bases are melaminepolycondensates.

**4.** Copolymers and graft copolymers according to Claim 1, characterized in that the weight ratio of esters (I) or (II) to perfluoroalkyl (meth)acrylates is 1:2.5 to 4.5.

**5.** Copolymers and graft copolymers according to Claim 1 or 2, characterized in that the content of esters (I) or (II) is 5 to 35% by weight, the content of perfluoroalkyl (meth) acrylates is 15 to 65% by weight

and that of other olefinically unsaturated monomers is 0 to 65% by weight.

6. Process for hydrophobic and oleophobic finishing of textile materials, leather and paper, characterized in that copolymers and graft copolymers according to Claims 1 to 5 are used.

7. Process according to Claim 6, characterized in that combinations of copolymers and graft copolymers of Claim 1 with other fluorine-containing copolymer dispersions are used.

8. Process according to Claim 6, characterized in that combinations of the copolymers or graft copolymers according to Claim 1 - 5 with aqueous colloidal suspensions of organosilsesquioxanes, if appropriate in combination with other fluorine-containing copolymer dispersions, are used.

## Revendications

1. Copolymères et copolymères greffés sur des substrats de greffage connus constitués d'acrylates ou du méthacrylates de perfluoralkyle et d'esters de formule générale (I) ou respectivement (II)

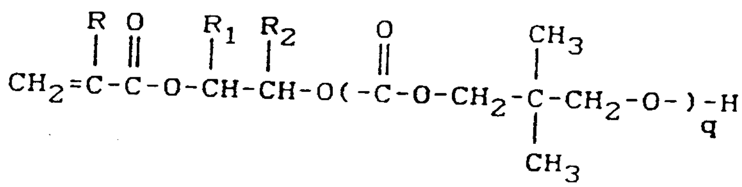

(I)

ou

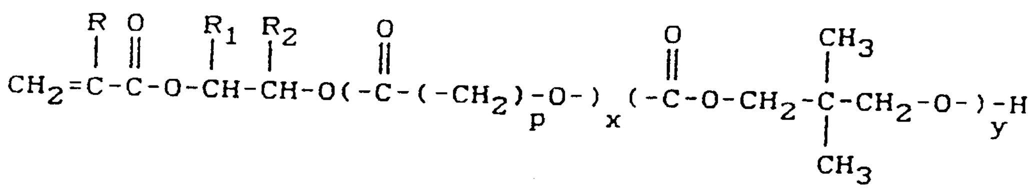

(II),

où -indépendamment les uns des autres -

| | |
|---|---|
| R, $R_1$ et $R_2$ | représentent de l'hydrogène ou un groupe méthyle, |
| p | a une valeur de 2 à 6, |
| q | a une valeur de 2 à 200 |

et x et y ont une valeur de 3 à 30,

et où les (méth)acrylates de perfluoralkyle répondent aux formules

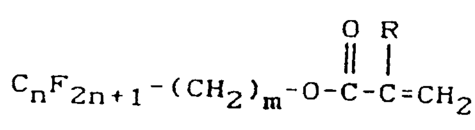

(III)

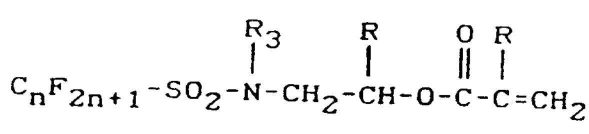

(IV)

ou

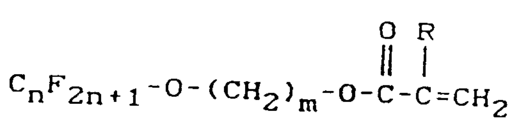

(V)

dans lesquelles

R est de l'hydrogène ou un groupe méthyle,

$R_3$ est de l'hydrogène ou un groupe alkyle en $C_1$ à $C_6$,

m a une valeur de 1 à 4 et

n a une valeur de 6 à 12,

le rapport en poids des esters aux (méth)acrylates de perfluoralkyle ayant une valeur de 1:1,5 à 6.

**2.** Copolymères et copolymères greffés suivant la revendication 1, caractérisés en ce qu'ils contiennent en outre des motifs d'autres monomères copolymérisables à nonsaturation oléfinique.

**3.** Copolymères greffés suivant la revendication 1, caractérisés en ce que les substrats de greffage sont des polycondensats de mélamine.

**4.** Copolymères et copolymères greffés suivant la revendication 1, caractérisés en ce que le rapport en poids des esters (I) et (II) aux (méth)acrylates de perfluoralkyle a une valeur de 1:2,5 à 4,5.

**5.** Copolymères et copolymères greffés suivant les revendications 1 et 2, caractérisés en ce que la proportion des esters (I) et (II) va de 5 à 35 % en poids, la proportion des (méth)acrylates de perfluoralkyle va de 15 à 65 % en poids et la proportion des autres monomères à non-saturation oléfinique va de 0 à 65 % en poids.

**6.** Procédé d'apprêtage hydrophobe et oléophobe de matières textiles, de cuir et de papier, caractérisé en ce qu'on utilise des copolymères et copolymères greffés suivant les revendications 1 à 5.

**7.** Procédé suivant la revendication 6, caractérisé en ce qu'on utilise des associations de copolymères et de copolymères greffés suivant la revendication 1 avec d'autres dispersions de copolymères contenant du fluor.

**8.** Procédé suivant la revendication 6, caractérisé en ce qu'on utilise des associations des copolymères ou des copolymères greffés suivant les revendications 1 à 5 avec des suspensions aqueuses colloïdales d'organo-silsesquioxanes, le cas échéant en association avec d'autres dispersions de copolymères contenant du fluor.